# EUROPEAN PATENT APPLICATION

(11) **EP 1 521 035 A1**
(43) Date of publication of application: **06.04.2005**
(21) Application number: 04022148.3
(22) Date of filing: 17.09.2004
(51) Int. Cl.: F21V 21/26, F21S 6/00, F21S 8/00

(54) **Lighting device, such as a table lamp, a floor lamp, a wall lamp or the like, having a movable supporting structure, controlled through shape memory means**

(30) Priority: 02.10.2003 IT TO20030769
(71) Applicant: C.R.F. Società Consortile per Azioni, 10043 Orbassano (TO) (IT)
(72) Inventor: Perlo, Piero, Strada Torino 50 10043 Orbassano(Torino) (IT); Alacqua, Stefano, 10090 Rivoli Cascine Vica (Torino) (IT); Butera, Francesco, 10100 Torino (IT); Capretti, Gianluca, 10043 Orbassano (Torino) (IT)
(74) Representative: Notaro, Giancarlo

(57) **Abstract**

A lighting device (1) is described herein, for example in the form of a table lamp, a floor lamp, a wall lamp or the like, comprising shape memory actuator means (4a,4b;6a,6b) that move the supporting structure (3,4,6) of the lamp from a configuration of minimum bulk to an operative configuration.

## Description

The present invention relates to the field of lighting devices, for instance in the form of table lamps, or floor lamps, or wall lamps, or the like, of the type comprising a base, a head having a body comprising a lamp-holder, and a supporting structure that connects the head to the base and including at least one articulated arm.

The main object of the present invention is to provide a lighting device of the type set out above which provides means for actuating the movement of the aforesaid support structure, usable instead of or as an alternative to a manual control, preferably to obtain an automatic movement of the lamp from a position of reduced bulk to an operative position when the lamp is turned on.

An additional object of the invention is to provide a lamp having a constructively simple and low cost structure.

In view of achieving said object, the invention relates to a lighting device of the type indicated above and characterised in that it comprises shape memory actuator means to control a movement of said at least one articulated arm between at least one position of minimum bulk and a second condition of use.

In a preferred embodiment, the aforesaid shape memory actuator means comprise at least one shape memory wire. Also in the case of said preferred embodiment, said at least one shape memory wire has one end connected to a first element whereon the aforesaid articulated arm is pivotally mounted, and the opposite end connected to a second element which is fastened to said oscillating arm. Also in the case of the preferred embodiment, the aforesaid shape memory wire extend parallel to said articulated arm and electrical power supply means are provided to supply an electrical current through said shape memory wire in order to cause a heating thereof and its consequent change in length by effect of the shape memory.

Also in the case of the preferred embodiment, an electrical control circuit is provided which automatically causes the activation of the means for supplying an electrical current through the shape memory wire as a result of a lighting of the lamp of the lighting device.

Thanks to the characteristics set out above, the lighting device according to the invention automatically performs, when it is turned on, a movement from the minimum bulk configuration to the preferred configuration of use. For example, in the case of a table or floor lamp, the minimum bulk configuration can correspond to a vertical condition of the aforesaid articulated arm, and the configuration of use to a rotated position of the articulated arm relative to the vertical configuration.

It should be noted that use of shape memory metal alloys is well known in the art and it is applied in several fields. Said alloys exhibit a transition of their structure as their temperature varies beyond a determined threshold value. The Applicant itself is the holder of several patents in the field of shape memory alloys and in particular with reference to various applications of said alloys. For example, in the motor vehicle field, applications of shape memory actuators to the actuation of rear-view mirrors, of deflecting louvers in conditioning systems or of disengaging members for motor vehicle door locks have been proposed and patented. The same Applicant is also the owner of patents relating to shape memory actuators considered in themselves, such as the flexible wire actuator forming the subject of the international patent application WO 03/003137 A1 or the actuator with bistable operation forming the subject of the European Patent EP 1 241 351.

The present invention is essentially based on the application of shape memory actuator means to the actuation of the support structure of a lighting device, such as a table lamp, a floor lamp, a wall lamp or the like.

It should be observed that the application of said shape memory actuator means enables to obtain an automatic movement of the lamp in its configuration of use starting from a minimum bulk condition when the lamp itself is turned on. However, said characteristic does not exclude the possibility of actuating the supporting structure manually.

Naturally, in its broadest definition, the invention is based on the use of shape memory actuator means (and in particular, in the case of the preferred embodiment described above, on the use of a shape memory wire which runs parallel to the articulated arm of the lamp) to actuate the lamp from a first position of minimum bulk to a second position of use. However, there obviously is the problem of also automating a return movement of the supporting structure of the lamp from the position of use to the position of minimum bulk. A first solution of said problem could simply entail the use of elastic means for returning the supporting structure of the lamp towards the condition of minimum bulk. In the absence of additional elements, this would require the lamp to be held in the operative condition, maintaining constantly activated the shape memory actuator means that actuate the movement towards the operative position. Although said solution cannot be excluded a priori, it would obviously entail the disadvantage of a needless expenditure of energy. According to more efficient solution, which is also comprised in present invention, elastic means are used for returning the support structure of the lamp towards the inoperative condition, as well as engaging means that automatically intervene when the lamp reaches its operative position, maintaining it in said position, so the lamp remains in the operative position even after the shape memory actuator means are de-energised. In the case of said additional solution, further actuator means are provided, for example also shape memory, to deactivate the engaging means to allow the supporting structure of the lamp to return to its configuration of minimum bulk. However, the preferred solution, according to the invention, is the one without elastic means for returning the supporting structure of the lamp towards the configuration of minimum bulk. In the preferred embodiment, the aforesaid articulated arm is mounted oscillating on the respective support element by means of a friction joint able to maintain the arm in any selected position. Thanks to said characteristic, the actuator means that actuate the movement of the arm from the condition of minimum bulk to the configuration of use can be de-energised after their activation without thereby causing a movement of the articulated arm from the operative position reached thereby. Also according to said preferred embodiment, the device further comprises second shape memory actuator means, preferably constituted by a shape memory wire, in order to move the articulated arm from the operative position to the position of minimum bulk.

In the aforesaid preferred embodiment, the two shape memory wires thus provided (whereof one is for actuating the movement towards the operative position and the other one the return movement towards the resting position) run parallel to the articulated arm, on the two opposite sides thereof. Obviously, only one of the two wires is active from time to time, depending on whether the articulated arm needs to be moved from its inoperative position to its operative position or vice versa. The non activated wire is subjected to an elongation during the activation of the other wire. To allow said elongation, each wire is connected at one of its ends to the related support element by means of a spring.

Naturally, the invention also applies to the case in which the supporting structure of the lamp comprises multiple articulated arms mutually arranged in series. In this case, to each of the articulated arms can be associated an actuating structure of the type described above.

Moreover, it is readily apparent that although according to the preferred embodiment shape memory actuator means are used to obtain an automatic movement of the supporting structure of the lamp from an inoperative position to an operative position, nothing precludes the lamp from being provided with shape memory actuator means that are able to actuate the lamp in multiple directions and/or towards multiple position. For example, shape memory actuator means could be provided, having a plurality of stable positions that are reached in sequence one after the other as a result of repeated activation operations. Otherwise, engaging means could be provided that intervene in succession to stop the supporting structure of the lamp in different positions, every time the shape memory actuator means are activated.

It is also readily apparent that the expression "articulated arm" as used in the present description and in the appended claims is meant to cover any articulated element, even if its shape is not properly similar to a veritable arm.

Lastly, it is clear that the shape and the structure of the various parts of the lamp can vary widely within the scope of application of the basic principle of the present invention.

Additional characteristics and advantages of the present invention shall become readily apparent from the description that follows with reference to the accompanying drawings, provided purely by way of non limiting example, in which:
- Figure 1 is a schematic elevation view of a floor lamp according to the present invention,
- Figure 1A shows a detail of Fig. 1 in enlarged scale,
- Figure 2 is a schematic perspective view of the lamp of Figure 1 in a different operative condition.
- Figure 3 is a perspective view of a table lamp according to the present invention,
- Figure 3A shows a variant of the lamp of Fig. 3,
- Figures 4, 5 are perspective view in enlarged scale of details of the lamp of Figure 3,
- Figure 6 is an exploded perspective view of a detail of the lamp of Figure 3,
- Figure 7 is a plan view of a wall lamp according to the present invention, and
- Figure 8 is a perspective schematic view of a joint of a supporting structure of a lamp, also according to the present invention.

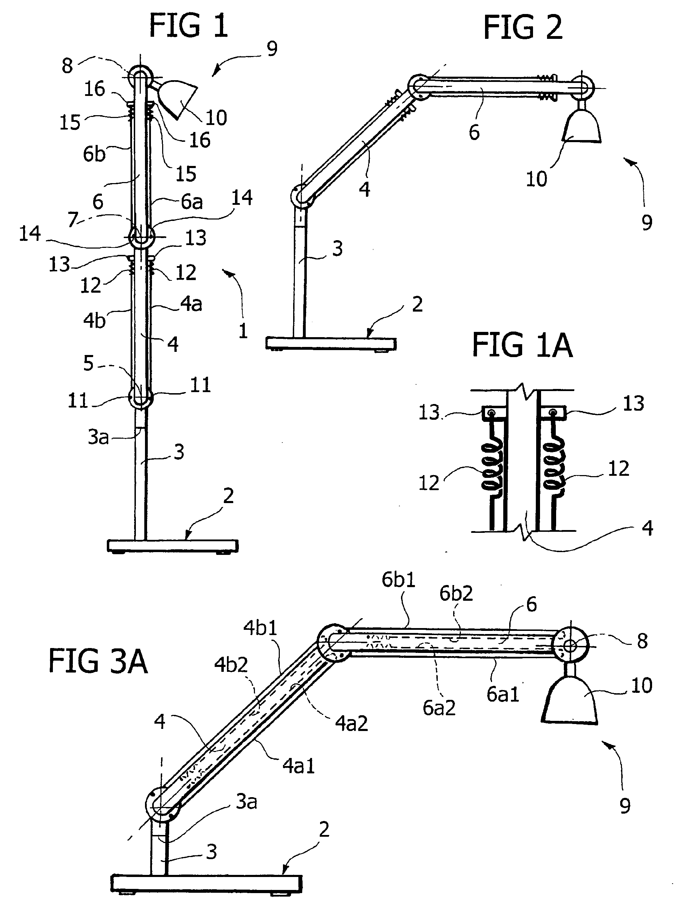

In Figures 1, 2, the reference number 1 globally designates a floor lamp comprising a base 2 in the form of a planar plate wherefrom rises a column 3. A first articulated arm 4 is mounted articulated at its lower end to the top of the column 3 around an axis 5, and at its opposite end to a second articulated arm 6 around an axis 7. In the illustrated embodiment, the structure comprises an articulation 3a interposed in the column 3 able to allow a rotation around the vertical axis of the column 3 of the overlying part of the lamp. At the top of the second articulated arm 6 is mounted articulated around an axis 8 a head 9 comprising a lamp holder (not shown in the drawing) for mounting an electric lamp, surrounded by a cap element 10.

In the specific example illustrated herein, the articulations around the axes 5, 7 are friction axes, i.e. they are so shaped as to require the application of a minimum torque around the respective axis of articulation to allow the rotation of the articulated arm around the respective axis. Said minimum torque value is set sufficiently high to assure that the articulation does not allow a rotation by effect of the simple weight of the connected parts. In this way, the supporting structure that connects the base 2 to the head 9 of the lamp, including the two articulated arms 4, 6, retains any selected configuration after one or more articulations have been actuated: it is therefore not subject to movements simply by effect of the weight of the articulated arms and of the head of the lamp. On the contrary, the articulation around the axis 8 can be a free articulation, albeit able to be fastened, which allows the head 9 to position itself by effect of gravity in a condition with vertical axis (see Figure 2) when the supporting structure of the lamp is brought from a configuration of minimum bulk (Figure 1) in which the column 3 and its two articulated arms 4, 6 are aligned vertically with respect to each other, to an operative configuration (Fig. 2), in which the articulated arms 4, 6 project in overhang relative to the axis of the vertical column 3.

In the preferred embodiment of the invention, the movement of the supporting structure of the lamp 1 from the configuration of minimum bulk illustrated in Figure 1 to the operative configuration shown in Figure 2 is obtained automatically when the lamp is lighted thanks to the use of shape memory actuator means. In the illustrated example, said shape memory actuator means include two pairs of shape memory wires 4a,4b and 6a,6b that extend parallel to the articulated arms 4,6 on the opposite sides thereof. In particular, the two shape memory wires 4a,4b have ends 11 connected to the structure of the column 3 and the opposite ends connected by the interposition of two helical springs 12 to two supports 13 integral with the articulated arm 4 (see also Fig. 1A). Similarly, the two shape memory wires 6a,6b associated to the articulated arm 6 have ends 14 connected to the upper end of the articulated arm 4 and the opposite ends connected by the interposition of two helical springs 15 to supports 16 integral with the articulated arm 6.

The lamp is provided in known fashion with an electrical power supply of its electrical lamp. According to the invention, said circuit further comprises means for supplying current selectively to each pair of shape memory wires 4a, 6a, and 4b, 6b. In particular, the electrical power supply circuit can be arranged to activate the wires 4a, 6a automatically when the lamp is lighted. The electrical current that flows through the shape memory wires causes their heating by the Joule effect, with consequent contraction of their length by effect of the shape memory. The contraction of the wires 4a,6a is controlled in such a way as to automatically obtain a movement of the lamp until reaching the configuration of Figure 2. In this phase, the shape memory wires 4b, 6b are inoperative and the related springs 12, 15 undergo an elongation in order not to hamper the movement of the supporting structure of the lamp towards the operative condition. As indicated, the whole can be arranged to obtain a determined movement in automatic fashion. Obviously, nothing precludes the shape memory means from having a control, separate from the control for lighting the lamp in order to cause the movement of the lamp to its active configuration even independently of the lighting of the lamp.

As clarified previously, the articulations 5, 7 have sufficient friction to assure that the operative configuration of Fig. 2, once reached, is maintained even if the shape memory means are deactivated.

Moreover, when the actuator means are deactivated, the lamp can still be actuated manually and brought to any configuration.

The shape memory wires 4b, 6b are activated to return the lamp to the inoperative position, preferably automatically when the lamp is turned off. Obviously, the selective activation of the wires 4a, 6a and 4b, 6b could be wholly independent from the turning on or off of the lamp. Moreover, the wires 4b, 6b could be activated to control a movement of the lamp to a position that is specularly opposite to that of Figure 2, and the activation of the wires 4a, 6a to bring the lamp back from said position to the vertical configuration of Fig. 1.

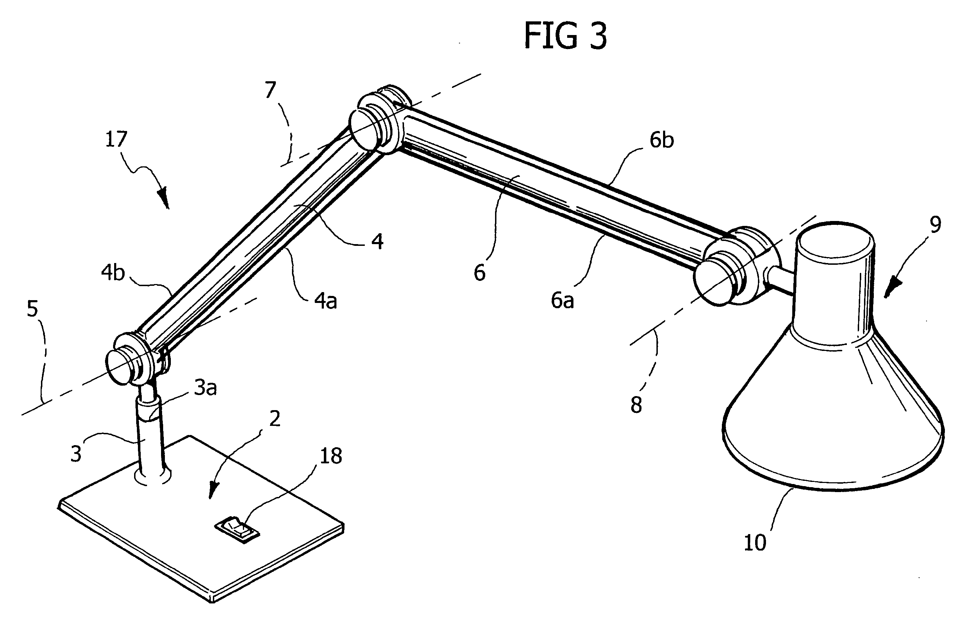

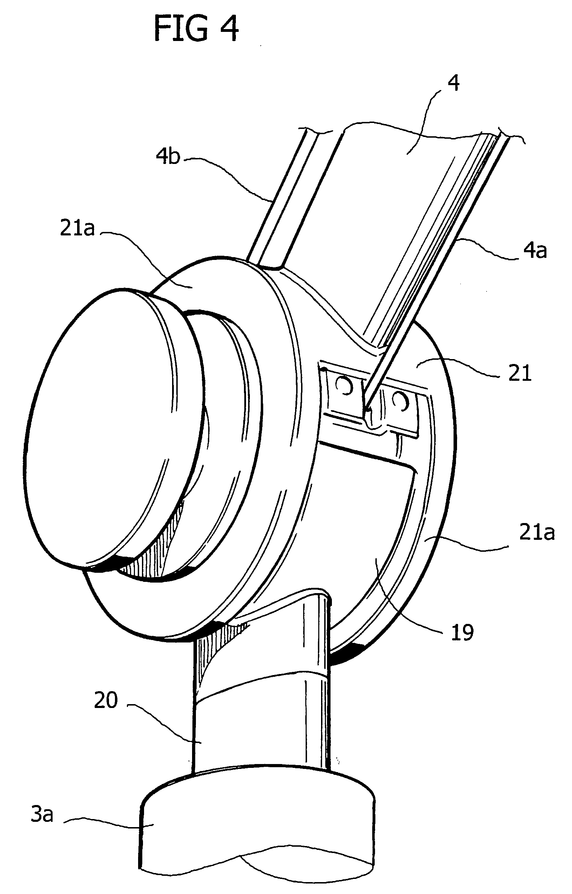

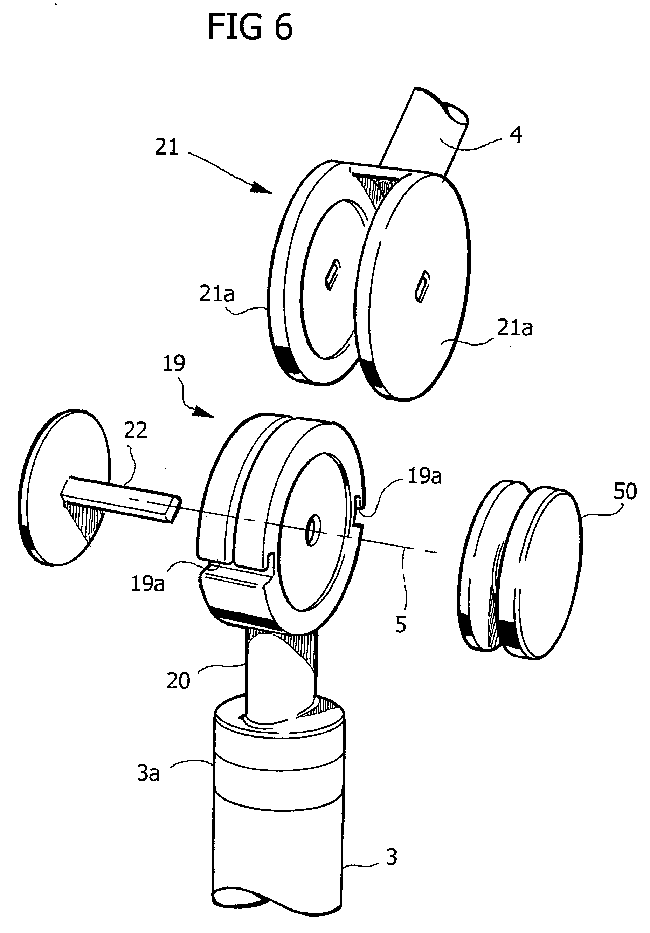

Figure 3 shows an additional embodiment of the invention constituted by a table lamp 17 whose structure substantially corresponds to that of the lamp of Figures 1, 2, except for a different constructive solution for the connection of the ends of the shape memory wires, which in this case are integrated inside the articulations of the structure of the lamp. Figure 3 also shows the switch 18 for turning the lamp on. The structure of the articulation corresponding to the axis of articulation 5 is shown in enlarged scale in Figures 4, 6. As shown, said articulation comprises a disk 19 that is fastened to the top of the connecting element 20, in turn connected by means of the articulation with vertical axis 3a to the top of the column 3, and a fork-shaped element 21 comprising two parallel and distanced disks 21a and mounted rotatably on the disk 19 around the axis 5 by means of an articulation pivot 22. The disks 21a are coupled in rotation to the pivot 22 (in the example, by means of a shaped coupling of the pivot, which has rectangular section, within corresponding slots of the disks 21a). To the pivot 22 is also coupled a knob 50. The disk 19 has two diametrically opposite axial grooves 19a destined to receive the ends of the two shape memory wires 4a, 4b. The fork element 21 is connected to the lower end of the articulated arm 4.

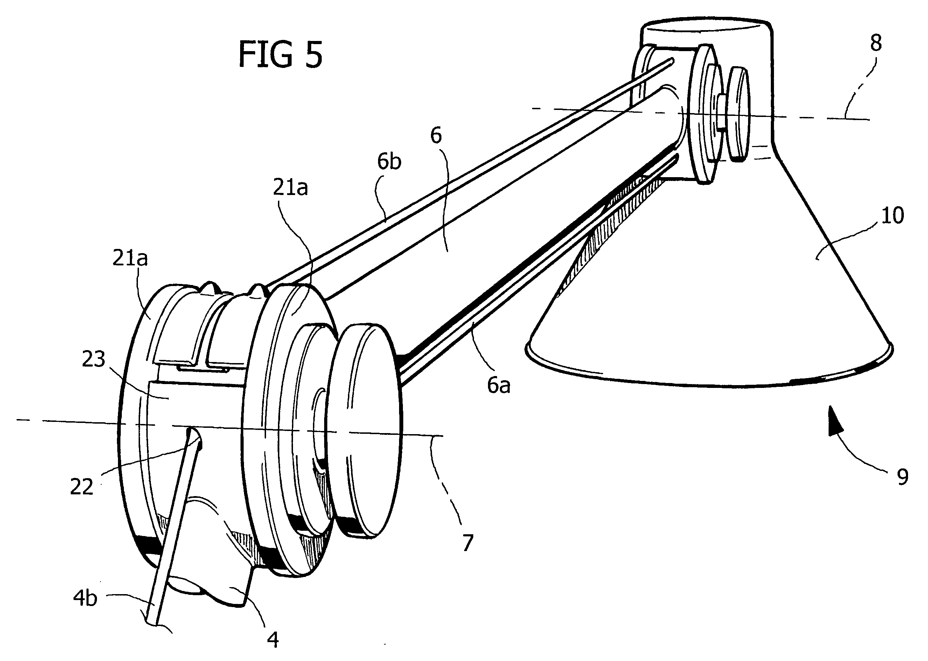

Figure 5 shows a perspective view of the articulations corresponding to the axes 7 and 8. The ends of the shape memory wires 4a, 4b opposite those fastened inside the axial grooves 19a pass through holes 22 obtained in the outer wall 23 of the disk 19 associated to the articulation 7 and connected to the arm 4. The wires 6a, 6b are associated to said disk 19 in similar fashion to the articulation 5 and at the opposite end they are anchored to the arm 6 in proximity to the articulation 8, in similar fashion to the wires 4a and 4b at the articulation 7.

Figure 3a shows a variant of the table lamp, in which each of the wires 4a, 4b, 6a, 6b is in fact arranged according to a U configuration, with an outward branch (4a1, 4b1, 6a1, 6b1) and a return branch (4a2, 4b2, 6a2, 6b2).

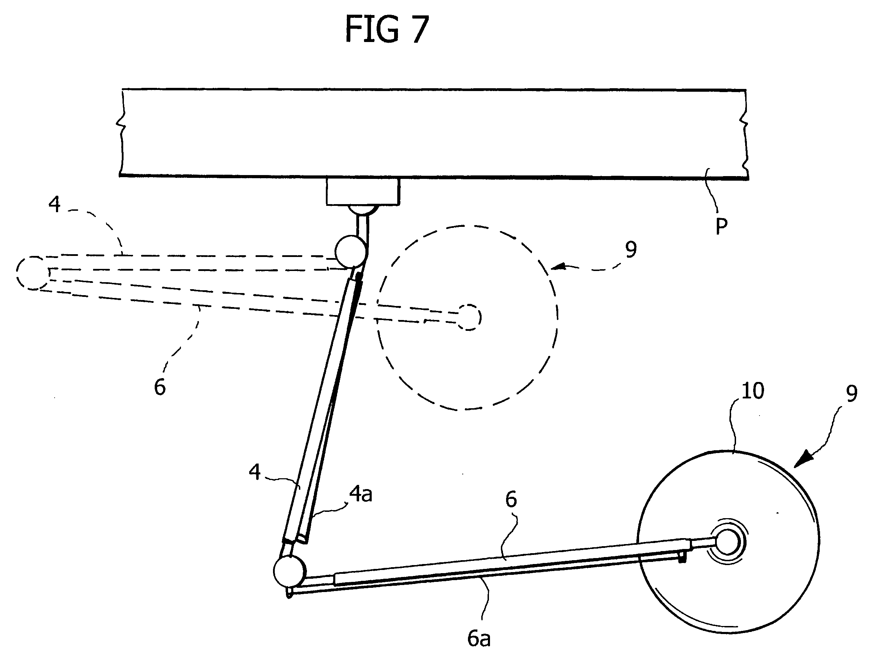

Figure 7 shows an additional embodiment of the invention, constituted by a lamp able to be fastened to a wall P. In this figure, the parts common to those of the figures described above are designated with the same reference number. In Figure 7 only shape memory wires 4a, 6a for controling the movement of the lamp from the position of minimum bulk to the operative position are visible.

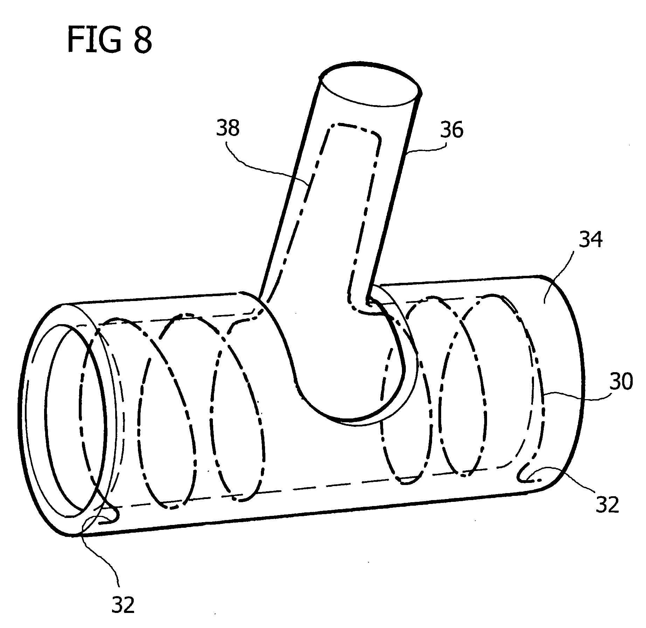

Lastly, Figure 8 shows the case of an articulation of an articulated arm of a supporting structure of a lamp, in which the rotation of the articulation from the resting position to the operative position is actuated by a shape memory spring 30, which has a central appendage 38 operatively connected to a stem 36 of the rotatable part and ends 32 connected to a bushing 34 within which is mounted a rotatable cylinder wherefrom extends the stem 36 according to a T configuration. In this case, a hitching device may be provided to lock the articulation in the operative position after the deactivation of the shape memory spring and an additional shape memory actuator to disable the hitching device when it is desired to return to the resting configuration.

From the preceding description, it is readily apparent that the principle at the basis of the present invention is to apply shape memory actuators to actuate the motion of the supporting structure of a lamp. Obviously, the arrangement and conformation of the aforesaid shape memory actuators could also be totally different from the one illustrated purely by way of example herein. Under this profile, one cannot exclude the application of shape memory actuator means of the type described for example in the international patent application WO 03/003137 A1 of in the European patent EP 1 241 351 by the same Applicant.

Naturally, moreover, without altering the principle of the invention, the construction details and the embodiments may be widely varied relative to what is described and illustrated purely by way of example herein, without thereby departing from the scope of the present invention.

## Claims

1. A lighting device, for example table lamp or floor lamp, or wall lamp or the like, comprising:
- a base (2),
- a head (9), having a body including a lamp-holder,
- a support structure (3, 4, 6) for connecting the head (9) to the base (2), including at least one articulated arm (4, 6),
**characterised in that** said device comprises shape memory actuator means (4a, 4b; 6a, 6b) to control a movement of said at least one articulated arm (4, 6) between at least one position of minimum bulk and a second condition of use.

2. Lighting device as claimed in claim 1, **characterised in that** the actuator means comprise at least a shape memory wire (4a; 6a).

3. A lighting device as claimed in claim 1, **characterised in that** the shape memory wire (4a; 6a) has one end connected to a first element whereon said articulated arm (4; 6) is pivotally mounted, and a second end connected to a second element (13; 16) connected to said articulated arm (4; 6).

4. Lighting device as claimed in claim 3, **characterised in that** the aforesaid shape memory wire (4a; 6a) extends parallel to said arm.

5. Lighting device as claimed in claim 3, **characterised in that** electrical power supply means are provided for supplying an electrical current through said shape memory wire (4a; 6a) to cause its heating and a consequent change in its length by effect of the shape memory.

6. Lighting device as claimed in claim 5, **characterised in that** control means are provided which automatically cause the activation of the means for supplying current through the shape memory wire (4; 6a) when the lighting device is lighted.

7. Lighting device as claimed in claim 1, **characterised in that** the shape memory wire is so arranged that its activation causes an oscillation of the articulated arm (4; 6) from a position of reduced bulk to an operative position.

8. Lighting device as claimed in claim 7, **characterised in that** the aforesaid articulated arm (4; 6) is mounted free to oscillate on said first element by means of a friction articulation able to maintain the arm in any selected position.

9. Lighting device as claimed in any of the previous claims, **characterised in that** the aforesaid supporting structure comprises a plurality of articulated arms mounted mutually in series and **in that** shape memory actuator means are provided, associated to one or more of said arms.

10. Lighting device as claimed in claim 2, **characterised in that** the shape memory actuator means comprise a first shape memory wire to actuate the movement of the supporting structure from the position of minimum bulk to the operative position, and a second shape memory wire to actuate the movement of the support structure from the operative position to the position of minimum bulk.

11. Lighting device as claimed in claim 10, **characterised in that** said first and second shaped memory wire run parallel and from opposite parts adjacent to the aforesaid articulated arm and have two ends connected to the element whereon said arm is articulated and the opposite ends connected to the structure of the articulated arm with the interposition of elastic means able to be elongated.

12. Lighting device as claimed in claim 1, **characterised in that** it is a table lamp.

13. Lighting device as claimed in claim 1, **characterised in that** it is a floor lamp.

14. Lighting device as claimed in claim 1, **characterised in that** it is a wall lamp.

15. Lighting device as claimed in any of the previous claims, **characterised in that** the head of the lamp is connected to the aforesaid supporting structure by means of an articulation able to allow the head of the lamp to orient itself by simple gravity in its operative position when the support structure is brought from the position of minimum bulk to the operative position.
